# EUROPEAN PATENT APPLICATION

(11) **EP 4 488 141 A1**
(43) Date of publication of application: **08.01.2025**
(21) Application number: 23183811.1
(22) Date of filing: 06.07.2023
(51) Int. Cl.: B60W 60/00, B60W 50/00, B60J 5/04, E05F 15/71

(54) **VEHICLE SYSTEM, METHOD FOR OPERATING A VEHICLE SYSTEM AND VEHICLE COMPRISING VEHICLE SYSTEM**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: LINDBERG NILSSON, Erik, 417 47 GÖTEBORG (SE); JOHANSSON, Jonathan, 417 14 GÖTEBORG (SE)
(74) Representative: Zacco Sweden AB

(57) **Abstract**

A vehicle system and method of a vehicle. The vehicle system comprises one or more door structures movably arranged relative to a body structure of the vehicle between a closed door position and open door positions. The one or more door structures are configured for providing access to an interior compartment of the vehicle. The vehicle system comprises a precipitation detection unit configured for detecting a precipitation condition at a location of the vehicle, and a wind determining unit configured for determining a wind direction at the location. Upon detection of the precipitation condition at the location by the precipitation detection unit and determination of the wind direction at the location of the vehicle by the wind determining unit, a vehicle activity based on the detected precipitation condition and the determined wind direction is initiated. The initiated vehicle activity is limiting precipitation from entering the interior compartment of the vehicle when at least one of the one or more door structures is arranged in an open door position.

## Description

### TECHNICAL FIELD

The present disclosure relates to a vehicle system comprising one or more door structures movably arranged relative to a body structure of the vehicle between a closed door position and open door positions. The one or more door structures are configured for providing access to an interior compartment of the vehicle. The system is configured for limiting precipitation, such as rain, snow, sleet, and/or hail, from entering the interior compartment of the vehicle. The disclosure further relates to a method for operating a vehicle system and a vehicle comprising the vehicle system.

### BACKGROUND

Modern vehicles are often designed with large vehicle door structures and large door openings in body structures providing efficient access to interior compartments of the vehicles. Sometimes, the vehicles comprise door structures that almost open up a whole side of the vehicles. Such vehicles may be used in vehicle fleet systems, where the vehicles are operated autonomously or semi-autonomously for transporting occupants or passengers with high frequency. When the door structures are opened frequently, there is a risk that the interior compartments of the vehicles become wet and dirty due to precipitation, such as rain, snow, sleet, and/or hail, entering the large door openings. This may cause problems for the passengers of the vehicles due to wet and dirty interior compartments, and for the vehicle owners due to high needs for cleaning the vehicles. Another issue is the problem with the climate system of the vehicles that need a high amount of energy for removing all humidity within the interior compartments.

There is thus a need for vehicle systems that are limiting the amount of precipitation entering the interior compartment of the vehicles.

### SUMMARY

An object of the present disclosure is to provide a vehicle system, a method for operating a vehicle system, and a vehicle comprising the vehicle system, where the previously mentioned problems are avoided. This object is at least partly achieved by the features of the independent claims. The dependent claims contain further developments of the vehicle system and the method for operating a vehicle system.

The disclosure concerns a vehicle system of a vehicle. The vehicle system comprises one or more door structures movably arranged relative to a body structure of the vehicle between a closed door position and open door positions. The one or more door structures are configured for providing access to an interior compartment of the vehicle. The vehicle system comprises a precipitation detection unit configured for detecting a precipitation condition at a location of the vehicle, and a wind determining unit configured for determining a wind direction at the location. Upon detection of the precipitation condition at the location by the precipitation detection unit and determination of the wind direction at the location of the vehicle by the wind determining unit, a vehicle activity based on the detected precipitation condition and the determined wind direction is initiated. The initiated vehicle activity is limiting precipitation from entering the interior compartment of the vehicle when at least one of the one or more door structures is arranged in an open door position.

Advantages with these features are that by detecting the precipitation condition, such as presence of rain, snow, sleet, and/or hail, and determining the wind direction at the location, the vehicle system can take measures limiting precipitation from entering the interior compartment of the vehicle when at least one of the one or more door structures is arranged in the open door position. The vehicle system is thus recognizing a precipitation condition, in which area the precipitation condition is occurring, and the wind direction at the location, and based on these input parameters, the vehicle system is able to determine a suitable vehicle activity. Through the vehicle activity, precipitation is limited from entering the interior compartment of the vehicle when at least one of the one or more door structures is arranged in the open door position. When the one or more door structures are opened frequently, there is a risk that the interior compartment of the vehicle becomes wet and dirty due to precipitation entering the door openings, and the vehicle activity is limiting this risk. By initiating the vehicle activity, the passengers of the vehicle are less likely to enter a wet and dirty interior compartment, and the amount of cleaning of the interior compartment can be reduced. Further, the initiated vehicle activity is reducing the amount of energy needed for removing humidity within the interior compartment.

In one embodiment, the vehicle system further comprises a vehicle positioning unit. The vehicle activity is related to positioning of the vehicle at the location. The vehicle positioning unit is configured for stopping the vehicle at the location upon the initiated vehicle activity with a vehicle side positioned as a leeward side of the vehicle in relation to the determined wind direction at the location. The vehicle system is configured for enabling displacement of one or more door structures arranged on the leeward side of the vehicle from the closed door position to an open door position. By stopping the vehicle at the location upon the initiated vehicle activity with a vehicle side positioned as a leeward side of the vehicle in relation to the determined wind direction at the location, precipitation entering the interior compartment of the vehicle when at least one of the one or more door structures is arranged in the open door positions is efficiently limited. By opening one or more door structures arranged on the leeward side of the vehicle, precipitation is limited from entering the interior compartment in a simple and efficient way due to the positioning of the door opening away from the direction of precipitation.

In one embodiment, the vehicle positioning unit is configured for stopping the vehicle at the location upon the initiated vehicle activity with the leeward side of the vehicle facing a road curb side. By facing the road curb side, safe exit and entering of the vehicle is enabled, while at the same time precipitation is limited from entering the interior compartment in a simple and efficient way due to the positioning of the door opening away from the direction of precipitation.

In one embodiment, the vehicle system comprises a door positioning unit. The vehicle activity is related to positioning of at least one of the one or more door structures by means of the door positioning unit. The door positioning unit is configured for arranging at least one of the one or more door structures into a predetermined door opening position upon the initiated vehicle activity. The door positioning unit is in this way controlling the operation of the one or more door structures, as well as the positioning of the one or more door structures into the predetermined door opening position upon the initiated vehicle activity. The door positioning unit may further be used for limiting the time during which the one or more door structures are arranged in the predetermined door opening position, as well as controlling if one or more door structures should be arranged in the predetermined door opening position.

In one embodiment, the precipitation detection unit is further configured for detecting a precipitation intensity amount upon detection of the precipitation condition at the location. The predetermined door opening position is depending on the detected precipitation intensity amount. By detecting the precipitation intensity amount at the location, the vehicle system is receiving further information about the weather condition at the location. This information is used by the vehicle system to decide on the predetermined door opening position for efficiently limiting precipitation entering the interior compartment of the vehicle when at least one of the one or more door structures is arranged in an open door position, for example by further limiting the door opening amount at higher precipitation intensity amounts.

In one embodiment, the wind determining unit is further configured for detecting a wind speed at the location. The predetermined door opening position is depending on the wind speed. By detecting the wind speed at the location, the vehicle system is receiving further information about the weather condition at the location. This information is used by the vehicle system to decide on the predetermined door opening position for efficiently limiting precipitation entering the interior compartment of the vehicle when at least one of the one or more door structures is arranged in an open door position, for example by further limiting the door opening amount at higher wind speeds.

In one embodiment, the vehicle system further comprises a passenger detection unit configured for determining a number of passengers exiting and/or entering the vehicle. The predetermined door opening position is depending on the detected number of passengers exiting and/or entering the vehicle. This is enabling efficient exit and entering operations for the passengers of the vehicle. The determined number of passengers is used for determining the predetermined door opening position, and when more passengers are detected, the vehicle system may decide to increase the door opening position compared to a situation where few passengers are exiting and/or entering the vehicle. By limiting the predetermined door opening position when few passengers are exiting and/or entering the vehicle, the vehicle system is limiting precipitation from entering the interior compartment of the vehicle when at least one of the one or more door structures is arranged in the open door position.

In one embodiment, the location is a predetermined destination of the vehicle. The location is thus not necessarily the present location of the vehicle, but instead a future predetermined destination of the vehicle, where the vehicle may initiate the vehicle activity. The predetermined destination of the vehicle may be a destination that is programmed in a navigation system or route-planning system of the vehicle. Through recognizing the precipitation condition at the predetermined destination and the wind direction at the predetermined destination, the vehicle system is, based on these input parameters, able to determine a suitable vehicle activity at the predetermined destination. Through the vehicle activity, precipitation is limited from entering the interior compartment of the vehicle when at least one of the one or more door structures is arranged in the open door position at the predetermined destination.

The disclosure further concerns a method for operating a vehicle system of a vehicle. The vehicle system comprises one or more door structures movably arranged relative to a body structure of the vehicle between a closed door position and open door positions. The one or more door structures are configured for providing access to an interior compartment of the vehicle. The vehicle system comprises a precipitation detection unit configured for detecting a precipitation condition at a location of the vehicle, and a wind determining unit configured for determining a wind direction at the location. The method comprises the steps: detecting the precipitation condition at the location by the precipitation detection unit; determining the wind direction at the location by the wind determining unit; initiating a vehicle activity based on the detected precipitation condition and the determined wind direction, wherein the initiated vehicle activity is limiting precipitation from entering the interior compartment of the vehicle when at least one of the one or more door structures is arranged in an open door position.

Advantages with the method are that by detecting the precipitation condition, such as rain, snow, sleet, and/or hail, and determining the wind direction at the location, the vehicle system can perform steps for limiting precipitation from entering the interior compartment of the vehicle when at least one of the one or more door structures is arranged in the open door position. The vehicle system is thus recognizing a precipitation condition, in which area the precipitation condition is occurring, and the wind direction at the location, and based on these input parameters, the vehicle system is able to determine a suitable vehicle activity. Through the vehicle activity, precipitation is limited from entering the interior compartment of the vehicle when at least one of the one or more door structures is arranged in the open door position. When the one or more door structures are opened frequently, there is a risk that the interior compartment of the vehicle becomes wet and dirty due to precipitation entering the door openings, and the initiated vehicle activity is limiting this risk. By initiating the vehicle activity, the passengers of the vehicle are less likely to enter a wet and dirty interior compartment, and the amount of cleaning of the interior compartment can be reduced. Further, the initiated vehicle activity is reducing the amount of energy needed for removing humidity within the interior compartment.

In one embodiment, the vehicle activity is related to positioning of the vehicle at the location. The method further comprises the steps: stopping the vehicle at the location upon the initiated vehicle activity with a vehicle side positioned as a leeward side of the vehicle in relation to the determined wind direction at the location; enabling displacement of one or more door structures arranged on the leeward side of the vehicle from the closed door position to an open door position. By stopping the vehicle at the location upon the initiated vehicle activity with a vehicle side positioned as a leeward side of the vehicle in relation to the determined wind direction at the location, precipitation entering the interior compartment of the vehicle when at least one of the one or more door structures is arranged in an open door position is efficiently limited. By opening one or more door structures arranged on the leeward side of the vehicle, precipitation is limited from entering the interior compartment in a simple and efficient way due to the positioning of the door opening away from the direction of precipitation.

In one embodiment, the method further comprises the step: stopping the vehicle at the location upon the initiated vehicle activity with the leeward side of the vehicle facing a road curb side. By facing the road curb side, safe exit and entering of the vehicle is enabled, while at the same time precipitation is limited from entering the interior compartment in a simple and efficient way due to the positioning of the door opening away from the direction of precipitation.

In one embodiment, the vehicle system comprises a door positioning unit, and the vehicle activity is related to positioning of at least one of the one or more door structures. The method further comprises the step: arranging at least one of the one or more door structures into a predetermined door opening position upon the initiated vehicle activity by means of the door positioning unit. The door positioning unit is in this way controlling the operation of the one or more door structures, as well as the positioning of the one or more door structures into the predetermined door opening position upon the initiated vehicle activity. The door positioning unit may further be used for limiting the time during which the one or more door structures are arranged in the predetermined door opening position, as well as controlling if one or more door structures should be arranged in the predetermined door opening position.

In one embodiment, the precipitation detection unit is further configured for detecting a precipitation intensity amount upon detection of the precipitation condition at the location. The method further comprises the step: arranging at least one of the one or more door structures into the predetermined door opening position, wherein the predetermined door opening position is depending on the detected precipitation intensity amount. By detecting the precipitation intensity amount at the location, the vehicle system is receiving further information about the weather condition at the location. This information is used by the vehicle system to decide on the predetermined door opening position for efficiently limiting precipitation entering the interior compartment of the vehicle when at least one of the one or more door structures is arranged in an open door position, for example by further limiting the door opening amount at higher precipitation intensity amounts.

In one embodiment, the wind determining unit is further configured for detecting a wind speed at the location. The method further comprises the step: arranging at least one of the one or more door structures into the predetermined door opening position, wherein the predetermined door opening position is depending on the wind speed. By detecting the wind speed at the location, the vehicle system is receiving further information about the weather condition at the location. This information is used by the vehicle system to decide on the predetermined door opening position for efficiently limiting precipitation entering the interior compartment of the vehicle when at least one of the one or more door structures is arranged in an open door position, for example by further limiting the door opening amount at higher wind speeds.

In one embodiment, the vehicle system further comprises a passenger detection unit configured for determining a number of passengers exiting and/or entering the vehicle. The method further comprises the step: arranging at least one of the one or more door structures into a predetermined door opening position, wherein the predetermined door opening position is depending on the detected number of passengers exiting and/or entering the vehicle. This is enabling efficient exit and entering operations for the passengers of the vehicle. The determined number of passengers is used for determining the predetermined door opening position, and when more passengers are detected, the vehicle system may decide to increase the door opening position compared to a situation where few passengers are exiting and/or entering the vehicle. By limiting the predetermined door opening position when few passengers are exiting and/or entering the vehicle, the vehicle system is limiting precipitation from entering the interior compartment of the vehicle when at least one of the one or more door structures is arranged in the open door position.

In one embodiment, the location is a predetermined destination of the vehicle. The method further comprises the steps: driving the vehicle to the predetermined destination; and initiating the vehicle activity at the predetermined destination. The location is thus not necessarily the present location of the vehicle, but instead a future predetermined destination of the vehicle, where the vehicle may initiate the vehicle activity. The predetermined destination of the vehicle may be a future destination that is programmed in a navigation system or route-planning system of the vehicle, to which the vehicle is driving. Through recognizing the precipitation condition at the predetermined destination and the wind direction at the predetermined destination, the vehicle system is, based on these input parameters, able to determine a suitable vehicle activity at the predetermined destination. Through the vehicle activity, precipitation is limited from entering the interior compartment of the vehicle when at least one of the one or more door structures is arranged in the open door position at the predetermined destination.

The disclosure further concerns a vehicle comprising the vehicle system described above.

### BRIEF DESCRIPTION OF DRAWINGS

The disclosure will be described in detail in the following, with reference to the attached drawings, in which:
- Fig. 1a-b: show schematically, in perspective views, a vehicle comprising a vehicle system with door structures movably arranged relative to a body structure, where the door structures are arranged in a closed door position and in a fully open door position,
- Fig. 2a-b: show schematically, in views from above, the vehicle at a location, where the door structures are arranged in the closed door position, and where two doors are arranged in an open door position, and
- Fig. 3a-c: show schematically, in views from above, the vehicle at an exemplified location, where a vehicle activity is initiated.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

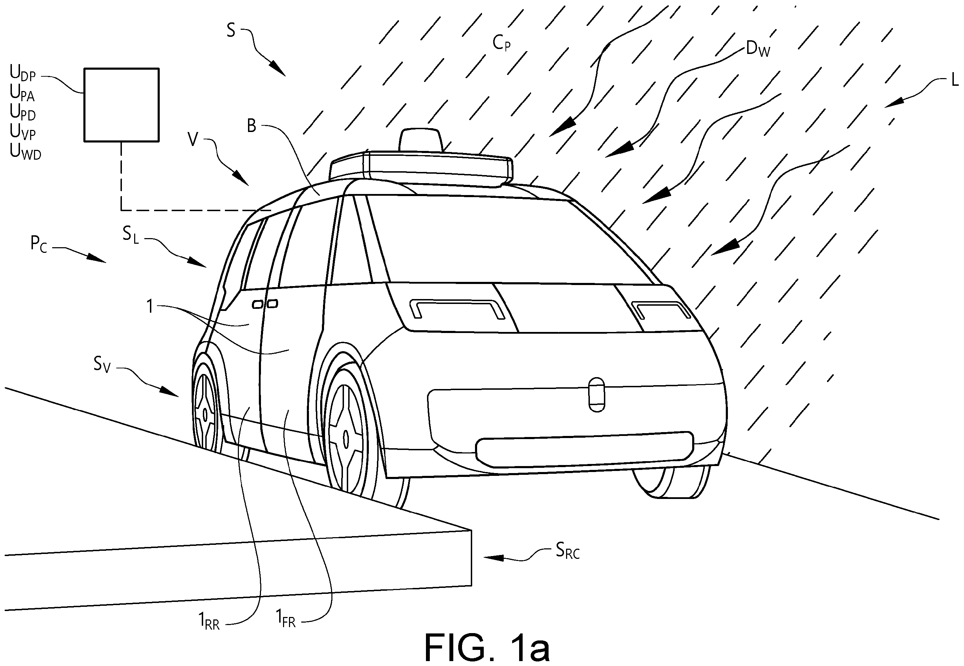

Figures 1a-b schematically show a vehicle V at a location L. The vehicle V may be any type of vehicle, such as for example a car, a minivan, an SUV, or a bus. The vehicle V may be of any configuration, such as for example an autonomous drive vehicle, a semi-autonomous drive vehicle, or a traditional driver controlled vehicle.

The vehicle V is arranged with a vehicle system S comprising one or more door structures 1 movably arranged relative to a body structure B of the vehicle V. The door structures 1 are each configured for being movably displaced between a closed door position Pc and open door positions Po, enabling access to an interior compartment 2 of the vehicle V. In the shown embodiment, the vehicle V comprises two door structures 1 arranged on each side of the vehicle V.

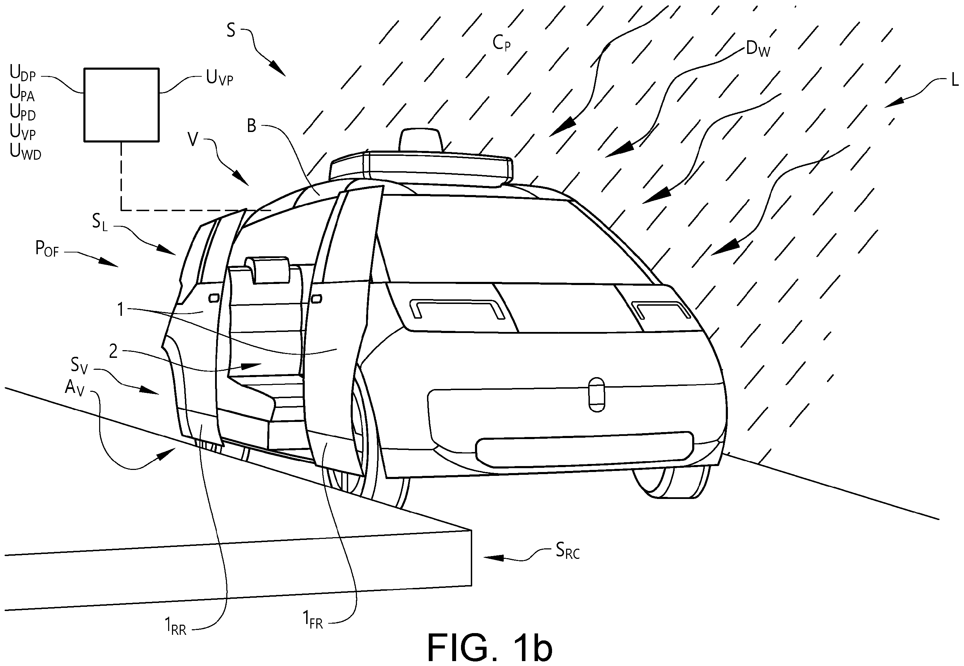

In figure 1a, the door structures 1 placed on the right hand side of the vehicle V are each arranged in the closed door position Pc, and in figure 1b the door structures 1 are each arranged in a fully open door position P_{OF}. With the expression open door position Po is meant any open door position Po, between the closed door position Pc and the fully open door position P_{OF}, including the fully open door position P_{OF}. The door structures 1 are each suitably configured for being individually positioned in any open door position Po. The vehicle system S may position only one of the door structures 1 into an open door position Po, or two or more door structures 1 into open door positions Po.

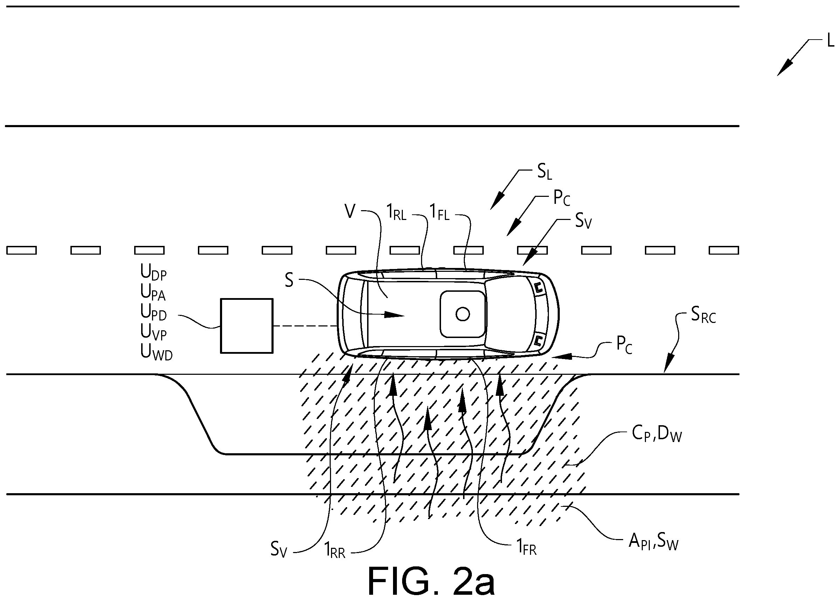

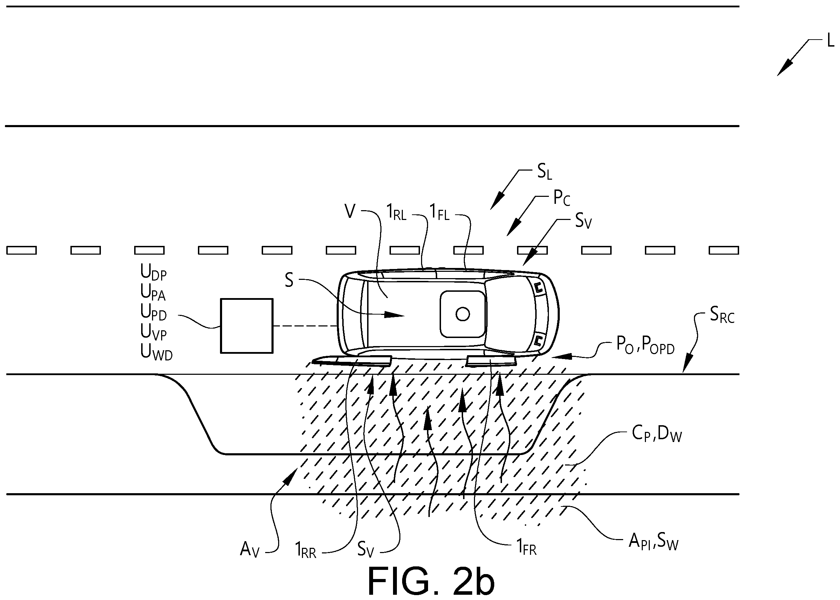

More specifically, in the embodiment shown in figures 1a-b and 2a-b, the vehicle V is exemplified with a front left door structure 1_{FL}, a front right door structure 1_{FR}, a rear left door structure 1_{RL}, and a rear right door structure 1_{RR}, each providing access to the interior compartment 2. In figures 1a and 2a, the front left door structure 1_{FL}, the front right door structure 1_{FR}, the rear left door structure 1_{RL}, and the rear right door structure 1_{RR} are each arranged in the closed door position Pc, and in figure 1b, the front right door structure 1_{FR} and the rear right door structure 1_{RR} are each arranged in the fully open door position P_{OF}. In figure 2b, the vehicle V is exemplified with the front left door structure 1_{FL} and the rear left door structure 1_{RL} arranged in the closed door position Pc, and with the front right door structure 1_{FR} and the rear right door structure 1_{RR} arranged in an open door position Po. The open door position Po may be any open door position P_{O} between the closed door position P_{C} and the fully open door position P_{OF}, including the fully open door position P_{OF}.

It should be understood that the vehicle V could be arranged with any suitable number of door structures 1. The door structures 1 may be of any suitable type, such as for example sliding door structures, as illustrated in figures 1a-b and 2a-b, and/or traditional hinged door structures.

In the embodiment shown in figures 1a-b and 2a-b, the vehicle system S further comprises a door positioning unit U_{DP}. The door positioning unit U_{DP} is used for positioning the one or more door structures 1 between the closed door position Pc and open door positions Po. The door positioning unit U_{DP} is suitably configured for arranging the one or more door structures 1 in any open door position P_{O}, between the closed door position P_{C} and the fully open door position P_{OF}, including the fully open door position P_{OF}.

The location L of the vehicle V may be any location, where the vehicle V is located or will be located, such as a present location L of the vehicle V or a future destination of the vehicle V. The location L could, as an example, be a predetermined destination D_{DP} of the vehicle V. The predetermined destination D_{DP} of the vehicle V may be a destination that is programmed in a navigation system or route-planning system of the vehicle V, to which the vehicle V is driving or will be driving, as will be further described below.

The vehicle system S comprises a precipitation detection unit U_{PD}. The precipitation detection unit U_{PD} is configured for detecting a precipitation condition C_{P} at a location L of the vehicle V. With a precipitation condition C_{P}, is meant the presence of any type of precipitation event at the location L of the vehicle V, such as rain, snow, sleet, and/or hail. The precipitation detection unit U_{PD} may be of any type and integrated as a vehicle unit, such as a rain sensor unit or other sensor unit that is detecting the precipitation condition C_{P}. The precipitation detection unit U_{PD} may for example be positioned in the vehicle V or at the location L, and arranged as a camera sensor, an ultrasonic sensor, or an infrared sensor. If arranged at the location L, the precipitation detection unit U_{PD} is communicating the precipitation condition C_{P} to the vehicle system S, via a vehicle communication protocol having any suitable configuration, such as a V2X communication system. The precipitation detection unit U_{PD} may, alternatively or in combination be arranged as a function of the vehicle system S that is connected to one or more weather forecasting databases predicting precipitation at the location L, where the vehicle system S is receiving precipitation condition C_{P} information from the one or more weather forecasting databases. Such a function may be cloud based.

The vehicle system S further comprises a wind determining unit U_{WD}. The wind determining unit U_{WD} is configured for determining a wind direction Dw at the location L. The wind determining unit U_{WD} may be integrated as a vehicle unit, and arranged as a sensor that is determining the wind direction Dw. The wind determining unit U_{WD} may be of any type and have any suitable configuration. The wind determining unit U_{WD} may for example be positioned on the vehicle V or at the location L and arranged as an ultrasonic wind sensor, a magnetic wind angle sensor, or a wing vane sensor. If arranged at the location L, the wind determining unit U_{WD} is communicating the wind direction D_{W} to the vehicle system S via a vehicle communication protocol having any suitable configuration, such as a V2X communication system. The wind determining unit U_{WD} may, alternatively or in combination be arranged as a function of the vehicle system S that is connected to one or more weather forecasting databases predicting wind direction Dw at the location L, where the vehicle system S is receiving wind direction Dw information from the one or more weather forecasting databases. Such a function may be cloud based.

Upon detection of the precipitation condition C_{P} at the location L by the precipitation detection unit U_{PD} and determination of the wind direction D_{W} at the location L of the vehicle V by the wind determining unit U_{WD}, a vehicle activity A_{V} based on the detected precipitation condition C_{P} and the determined wind direction D_{W} is initiated. The initiated vehicle activity A_{V} is limiting precipitation from entering the interior compartment 2 of the vehicle V when at least one of the one or more door structures 1 is arranged in an open door position Po.

By detecting the precipitation condition C_{P}, such as presence of rain, snow, sleet, and/or hail, and determining the wind direction D_{W} at the location L, the vehicle system S can perform suitable steps for limiting precipitation from entering the interior compartment 2 of the vehicle V when at least one of the one or more door structures 1 is arranged in the open door position Po. The vehicle system S is receiving the precipitation condition C_{P} from the precipitation detection unit U_{PD}, in which location L the precipitation condition C_{P} is occurring, and the wind direction D_{W} at the location L from the wind determining unit U_{WD}. Based on these input parameters from the precipitation detection unit U_{PD} and the wind determining unit U_{WD}, the vehicle system S is able to determine a suitable vehicle activity A_{V}. Through the vehicle activity A_{V}, rain, snow, sleet, and/or hail, is limited from entering the interior compartment 2 of the vehicle V when at least one of the one or more door structures 1 is arranged in the open door position Po.

When the one or more door structures 1 are opened, as exemplified in figure 2b, there is a risk that the interior compartment 1 of the vehicle V becomes wet and dirty due to rain, snow, sleet, and/or hail, enters the vehicle V through the door openings into the interior compartment 2. The initiated vehicle activity A_{V} is limiting this risk. By initiating the vehicle activity A_{V}, the passengers of the vehicle V are less likely to enter a wet and dirty interior compartment 2, and the amount of cleaning of the interior compartment 2 can be reduced. Further, the initiated vehicle activity A_{V} is reducing the amount of energy needed for removing humidity within the interior compartment 2, for example by a vehicle integrated air-conditioning system.

In the embodiment shown in figures 1a-b and 2a-b, the vehicle system S further comprises a vehicle positioning unit U_{VP}. The vehicle positioning unit U_{VP} may have any suitable configuration, such as a vehicle navigation system or other vehicle positioning system. The vehicle positioning unit U_{VP} is used for determining the geographical position of the vehicle V, and the vehicle positioning unit U_{VP} may further be used together with other vehicle systems for navigating the vehicle to a specific destination, such as the predetermined destination D_{DP}.

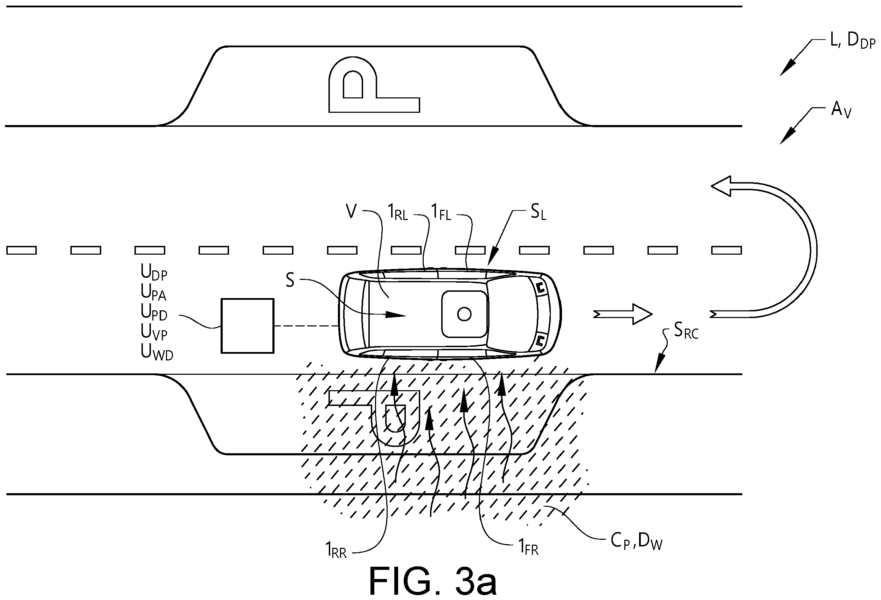

The vehicle activity A_{V} may in embodiments be related to positioning of the vehicle V at the location L. With such a vehicle activity A_{V}, the vehicle positioning unit U_{VP} can be used for stopping the vehicle V at the location L upon the initiated vehicle activity Av with a vehicle side Sv positioned as a leeward side S_{L} of the vehicle V in relation to the determined wind direction D_{W} at the location L. In this way, the vehicle system S is limiting precipitation from entering the interior compartment 2 of the vehicle V when at least one of the one or more door structures 1 positioned on the leeward side S_{L} of the vehicle V is arranged in an open door position Po. When the vehicle V is positioned with a vehicle side Sv as a leeward side S_{L} of the vehicle V in relation to the determined wind direction Dw at the location L, the vehicle system S is enabling displacement of one or more door structures 1 arranged on the leeward side S_{L} of the vehicle V from the closed door position Pc to an open door position Po, as exemplified in figures 3a-c.

In figure 3a, the vehicle V is driving at the location L, and when it is determined that the vehicle V should make a stop at the location L, the vehicle activity A_{V} is initiated by the vehicle system S. A driver or a passenger of the vehicle V may request that the vehicle V should make a stop at the location L, or alternatively the stop is requested by a vehicle navigation system or route planning system when the vehicle V is reaching a planned destination. Suitably when the request for stopping the vehicle V is made, the vehicle system S is receiving information about a detected precipitation condition C_{P} at the location L from the precipitation detection unit U_{PD}, and information about a determined wind direction Dw at the location L from the wind determining unit U_{WD}. If for example it is detected that it is raining at the location L, and thus the precipitation condition C_{P} is fulfilled, the vehicle V is initiating the vehicle activity A_{V} based on the detected precipitation condition C_{P} and the determined wind direction Dw. As understood from figure 3a, if the vehicle V is stopped in the position shown in figure 3a to pick up or drop off passengers from the vehicle V towards a road curb side S_{RC}, the front right door structure 1_{FR} and/or the rear right door structure 1_{RR} must be opened. From figure 3a it is understood that the right hand side of the vehicle V is facing the wind, and that the left hand side of the vehicle V is the leeward side S_{L}. If opening the front right door structure 1_{FR} and/or the rear right door structure 1_{RR} in the position shown in figure 3a towards the wind, rain will enter the passenger compartment 2.

In the position of the vehicle V illustrated in figure 3a, when rain falls towards the right hand side of the vehicle V due to wind, the amount of rain that enters the interior compartment 2 would be different depending on if the door structures 1 arranged on the left hand side of the vehicle V were opened or if the door structures 1 arranged on the right hand side of the vehicle V were opened. It should also be understood that opening the door structures 1 on the left hand side of the vehicle V towards traffic would not be optimal from a safety perspective.

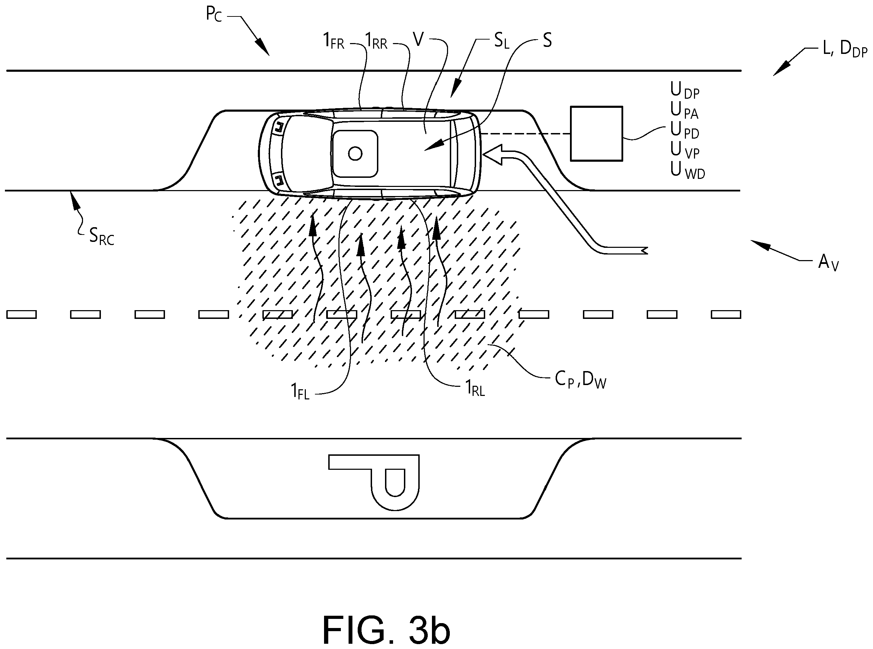

Thus, stopping the vehicle V and opening the front right door structure 1_{FR} and/or the rear right door structure 1_{RR} in the position shown in figure 3a towards the wind, is not considered optimal by the vehicle system S for limiting precipitation from entering the interior compartment 2. Further, opening the front left door structure 1_{FL} and/or the rear left door structure 1_{RL} in the position shown in figure 3a on the leeward side S_{L} of the vehicle V is not desired from a safety perspective. In this situation, the vehicle system S, based on the detected precipitation condition C_{P} and the determined wind direction D_{W}, will decide to stop the vehicle V safely at the location L upon the initiated vehicle activity Av with a vehicle side Sv positioned as a leeward side S_{L} of the vehicle V in relation to the determined wind direction D_{W} at the location L. In order to accomplish this, the vehicle V needs to be re-routed and turn around as illustrated with the arrows in figure 3a, into the stopped position shown in figure 3b.

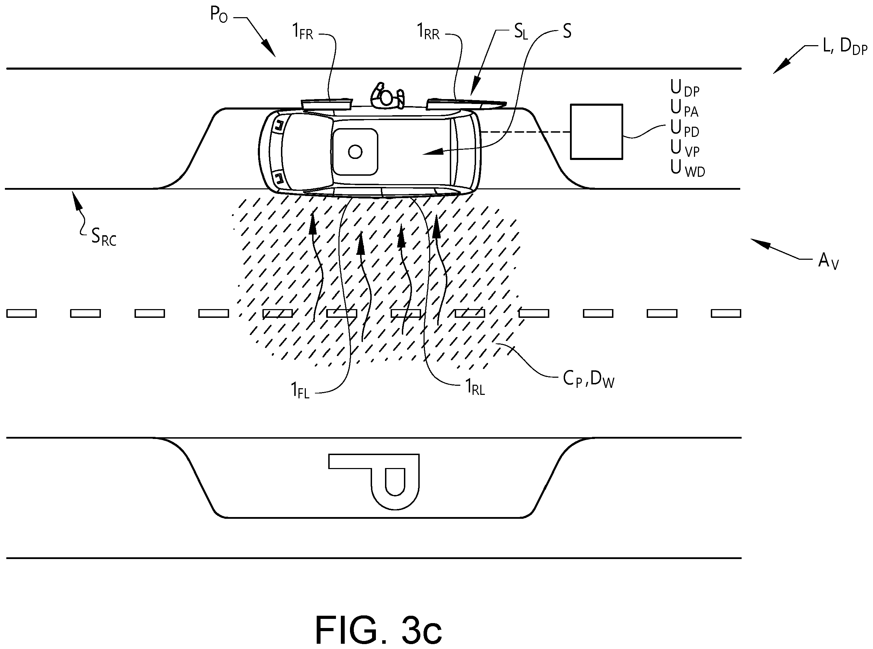

In figure 3b, the vehicle V is illustrated with the vehicle side Sv facing the road curb side S_{RC} positioned as the leeward side S_{L} of the vehicle V in relation to the determined wind direction Dw at the location L. The vehicle V has in figure 3b been stopped at the location L upon the initiated vehicle activity Av with the leeward side S_{L} of the vehicle V facing the road curb side S_{RC}. When the vehicle V is safely stopped, the front right door structure 1_{FR} and/or the rear right door structure 1_{RR} arranged on the leeward side S_{L} of the vehicle V can be displaced from the closed door position Pc shown in figure 3b to the open door position Po shown in figure 3c. In this way, the initiated vehicle activity A_{V} is limiting rain from entering the interior compartment 2 of the vehicle V when at least one of the one or more door structures 1 is arranged in the open door position Po.

The information related to the precipitation condition C_{P} and the wind direction D_{W}, is thus used by the vehicle system S to navigate the vehicle V or re-route the vehicle V so that the vehicle V can stop on the side of a road when picking up or dropping off passengers so that precipitation is not entering the interior compartment in such quantity as it should have from the other side of the vehicle V. In this way, the initiated vehicle activity A_{V} is limiting rain from entering the interior compartment 2 of the vehicle V when at least one of the one or more door structures 1 is arranged in the open door position Po.

As described above, the location L is not necessarily the present location of the vehicle, but alternatively a future predetermined destination D_{DP} of the vehicle V, where the vehicle V may initiate the vehicle activity A_{V}. In the example shown in figures 3a-c, the location L may be a predetermined destination D_{DP}. Through recognizing the precipitation condition C_{P} at the predetermined destination D_{DP} and the wind direction Dw at the predetermined destination D_{DP}, the vehicle system S is, based on these input parameters, able to determine the vehicle activity A_{V} at the predetermined destination D_{DP}. Through the vehicle activity A_{V}, as shown in figures 3a-c, precipitation is limited from entering the interior compartment 2 of the vehicle V when at least one of the one or more door structures 1 is arranged in the open door position Po at the predetermined destination D_{DP}.

In the example shown in figures 3a-c, the vehicle positioning unit U_{VP} is stopping the vehicle V at the location L upon the initiated vehicle activity A_{V} with the leeward side S_{L} of the vehicle V facing the road curb side S_{RC}. By facing the road curb side S_{RC}, safe exit and entering of the vehicle V is enabled, while at the same time precipitation is limited from entering the interior compartment 2 in a simple and efficient way due to the positioning of the door opening away from the direction of precipitation. The vehicle system S is detecting the surrounding environment of the vehicle V to determine a safe stopping position.

By stopping the vehicle V at the location L upon the initiated vehicle activity A_{V} with the vehicle side Sv positioned as the leeward side S_{L} of the vehicle V in relation to the determined wind direction Dw at the location L, precipitation entering the interior compartment 2 of the vehicle when at least one of the one or more door structures 1 is arranged in the open door position P_{O} is efficiently limited.

The vehicle activity A_{V} may in embodiments be related to positioning of at least one of the one or more door structures 1 by means of the door positioning unit U_{DP}. With such a vehicle activity Av, the door positioning unit U_{DP} is arranging at least one of the one or more door structures 1 into a predetermined door opening position P_{OPD} upon the initiated vehicle activity Av. The door positioning unit U_{DP} may for example comprise electric motors or other actuators that are used for opening and closing the door structures 1 into any desired position. Such a vehicle activity A_{V} may be suitable if it is not possible to open the door structures 1 arranged on the leeward side S_{L} of the vehicle V, due to the position of the vehicle V. It may in certain situations be impossible to re-route the vehicle V, and for example the only side of the vehicle V facing the road curb side S_{RC} is arranged towards the wind, as for example in the vehicle position shown in figure 2b. The door positioning unit U_{DP} is then controlling the operation of the one or more door structures 1, as well as the positioning of the one or more door structures 1 into the predetermined door opening position D_{OPD} upon the initiated vehicle activity A_{V}. The predetermined door opening position P_{OPD} when the vehicle side Sv is facing the wind may be a limited opening position compared to a situation where the vehicle side Sv is facing away from the wind. In this situation, the vehicle system S may also decide to open only one of the door structures 1 instead of both by means of the door positioning unit U_{DP}. The door positioning unit U_{DP} may further be used for limiting the time during which the one or more door structures are arranged in the predetermined door opening position P_{OPD}.

The precipitation detection unit U_{PD} may further be configured for detecting a precipitation intensity amount A_{PI} upon detection of the precipitation condition C_{P} at the location L, as exemplified in figures 2a-b. As described above, the precipitation detection unit U_{PD} may be of any type and integrated as a vehicle unit, such as a rain sensor unit or other sensor unit that is detecting the precipitation condition C_{P}. This sensor unit may also be used for determining the precipitation intensity amount A_{PI}. By detecting the precipitation intensity amount A_{PI}, the vehicle system S can use this information for determining the predetermined door opening position P_{OPD} depending on the detected precipitation intensity amount A_{PI}. In this way, the amount of as rain, snow, sleet, and/or hail, detected by the precipitation detection unit U_{PD} is determining the door opening position. By detecting the precipitation intensity amount A_{PI} at the location L, the vehicle system S is receiving further information about the weather condition at the location L. This information is used by the vehicle system S to decide on the predetermined door opening position P_{OPD} for efficiently limiting precipitation entering the interior compartment 2 of the vehicle V when at least one of the one or more door structures 1 is arranged in an open door position P_{O}, for example by further limiting the door opening amount at higher precipitation intensity amounts A_{PI}. In this situation, the vehicle system S may also decide to open only one of the door structures 1 instead of both by means of the door positioning unit U_{DP}. The door positioning unit U_{DP} may further be used for limiting the time during which the one or more door structures are arranged in the predetermined door opening position P_{OPD}, depending on the precipitation intensity amount A_{PI} at the location L.

The wind determining unit U_{WD} may further be configured for detecting a wind speed Sw at the location L, as exemplified in figures 2a-b. In this embodiment, the wind determining unit U_{WD} is arranged with a suitable wind speed sensor. By detecting the wind speed Sw, the vehicle system S can use this information for determining the predetermined door opening position P_{OPD} depending on the detected wind speed Sw. In this way, the wind speed Sw detected by the wind determining unit U_{WD} is determining the door opening position, and the predetermined door opening position P_{OPD} is depending on the wind speed Sw. By detecting the wind speed Sw at the location L, the vehicle system S is receiving further information about the weather condition at the location L. This information is used by the vehicle system S to decide on the predetermined door opening position P_{OPD} for efficiently limiting precipitation entering the interior compartment 2 of the vehicle V when at least one of the one or more door structures 1 is arranged in an open door position P_{O}, for example by further limiting the door opening amount at higher wind speeds Sw. In this situation, the vehicle system S may also decide to open only one of the door structures 1 instead of both by means of the door positioning unit U_{DP}. The door positioning unit U_{DP} may further be used for limiting the time during which the one or more door structures are arranged in the predetermined door opening position P_{OPD}, depending on the wind speed Sw at the location L.

The vehicle system S may further comprise a passenger detection unit U_{PA} configured for determining a number of passengers exiting and/or entering the vehicle V. The passenger detection unit U_{PA} may for example be arranged as a camera unit that together with suitable software determines the number of passengers exiting and/or entering the vehicle V. In this way, the predetermined door opening position P_{OPD} may depend on the detected number of passengers exiting and/or entering the vehicle V. This is enabling efficient exit and entering operations for the passengers of the vehicle V. The determined number of passengers is used for determining the predetermined door opening position P_{OPD}, and when more passengers are detected, the vehicle system may decide to increase the door opening position compared to a situation where few passengers are exiting and/or entering the vehicle. By limiting the predetermined door opening position P_{OPD} when few passengers are exiting and/or entering the vehicle V, the vehicle system S is limiting precipitation from entering the interior compartment 2 of the vehicle V when at least one of the one or more door structures 1 is arranged in the open door position Po. The vehicle system S may also decide to open only one of the door structures 1 instead of both by means of the door positioning unit U_{DP}, if few passengers are entering or exiting the vehicle V. The door positioning unit U_{DP} may further be used for limiting the time during which the one or more door structures are arranged in the predetermined door opening position P_{OPD}, depending on the detected number of passengers exiting and/or entering the vehicle V.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of the vehicle system, the one or more programs comprising instructions for performing the method according to any one of the above-discussed embodiments. Alternatively, according to another exemplary embodiment a cloud computing system can be configured to perform any of the method aspects presented herein. The cloud computing system may comprise distributed cloud computing resources that jointly perform the method aspects presented herein under control of one or more computer program products. Moreover, the processor may be connected to one or more communication interfaces and/or sensor interfaces for receiving and/transmitting data with external entities such as e.g. sensors arranged on the vehicle surface, an off-site server, or a cloud-based server.

The processor or processors associated with the vehicle system may be or include any number of hardware components for conducting data or signal processing or for executing computer code stored in memory. The system may have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Door structure
- 1_{FL}:: Front left door structure
- 1_{FR}:: Front rear door structure
- 1_{RL}:: Rear left door structure
- 1_{RR}:: Rear right door structure
- 2:: Interior compartment

- A_{PI}:: Precipitation intensity amount
- A_{V}:: Vehicle activity
- B:: Body structure
- C_{P}:: Precipitation condition
- D_{DP}:: Predetermined destination
- D_{W}:: Wind direction
- L:: Location
- S:: Vehicle system
- S_{L}:: Leeward side
- S_{RC}:: Road curb side
- Sv:: Vehicle side
- Sw:: Wind speed
- V:: Vehicle
- Pc:: Closed door position
- Po:: Open door position
- P_{OF}:: Fully open door position
- P_{OPD}:: Predetermined door opening position
- U_{DP}.: Door positioning unit
- U_{PA}:: Passenger detection unit
- U_{PD}:: Precipitation detection unit
- U_{VP}:: Vehicle positioning unit
- U_{WD}:: Wind determining unit

## Claims

1. A vehicle system (S) of a vehicle (V), wherein the vehicle system (S) comprises one or more door structures (1) movably arranged relative to a body structure (B) of the vehicle (V) between a closed door position (Pc) and open door positions (Po), wherein the one or more door structures (1) are configured for providing access to an interior compartment (2) of the vehicle (V),
wherein the vehicle system (S) comprises a precipitation detection unit (U_{PD}) configured for detecting a precipitation condition (C_{P}) at a location (L) of the vehicle (V), and a wind determining unit (U_{WD}) configured for determining a wind direction (D_{W}) at the location (L),
wherein upon detection of the precipitation condition (C_{P}) at the location (L) by the precipitation detection unit (U_{PD}) and determination of the wind direction (Dw) at the location (L) of the vehicle (V) by the wind determining unit (U_{WD}), a vehicle activity (A_{V}) based on the detected precipitation condition (C_{P}) and the determined wind direction (D_{W}) is initiated, wherein the initiated vehicle activity (Av) is limiting precipitation from entering the interior compartment (2) of the vehicle (V) when at least one of the one or more door structures (1) is arranged in an open door position (Po).

2. The vehicle system (S) according to claim 1,
wherein the vehicle system (S) further comprises a vehicle positioning unit (U_{VP}), wherein the vehicle activity (A_{V}) is related to positioning of the vehicle (V) at the location (L), wherein vehicle positioning unit (U_{VP}) is configured for stopping the vehicle (V) at the location (L) upon the initiated vehicle activity (Av) with a vehicle side (Sv) positioned as a leeward side (S_{L}) of the vehicle (V) in relation to the determined wind direction (D_{W}) at the location (L), wherein the vehicle system (S) is configured for enabling displacement of one or more door structures (1) arranged on the leeward side (S_{L}) of the vehicle (V) from the closed door position (Pc) to an open door position (Po).

3. The vehicle system (S) according to claim 2,
wherein the vehicle positioning unit (U_{VP}) is configured for stopping the vehicle (V) at the location (L) upon the initiated vehicle activity (A_{V}) with the leeward side (S_{L}) of the vehicle (V) facing a road curb side (S_{RC}).

4. The vehicle system (S) according to any preceding claim,
wherein the vehicle system (S) comprises a door positioning unit (U_{DP}), wherein the vehicle activity (A_{V}) is related to positioning of at least one of the one or more door structures (1) by means of the door positioning unit (U_{DP}), wherein the door positioning unit (U_{DP}) is configured for arranging at least one of the one or more door structures (1) into a predetermined door opening position (P_{OPD}) upon the initiated vehicle activity (A_{V}).

5. The vehicle system (S) according to claim 4,
wherein the precipitation detection unit (U_{PD}) further is configured for detecting a precipitation intensity amount (A_{PI}) upon detection of the precipitation condition (C_{P}) at the location (L), wherein the predetermined door opening position (P_{OPD}) is depending on the detected precipitation intensity amount (A_{PI}).

6. The vehicle system (S) according to claim 4 or 5,
wherein the wind determining unit (U_{WD}) further is configured for detecting a wind speed (Sw) at the location (L), wherein the predetermined door opening position (P_{OPD}) is depending on the wind speed (Sw).

7. The vehicle system (S) according to any of claims 4 to 6,
wherein the vehicle system (S) further comprises a passenger detection unit (U_{PA}) configured for determining a number of passengers exiting and/or entering the vehicle (V), wherein the predetermined door opening position (P_{OPD}) is depending on the detected number of passengers exiting and/or entering the vehicle (V).

8. The vehicle system (S) according to any preceding claim,
wherein the location (L) is a predetermined destination (D_{DP}) of the vehicle (V).

9. A method for operating a vehicle system (S) of a vehicle (V), wherein the vehicle system (S) comprises one or more door structures (1) movably arranged relative to a body structure (B) of the vehicle (V) between a closed door position (P_{C}) and open door positions (Po), wherein the one or more door structures (1) are configured for providing access to an interior compartment (2) of the vehicle (V),
wherein the vehicle system (S) comprises a precipitation detection unit (U_{PD}) configured for detecting a precipitation condition (C_{P}) at a location (L) of the vehicle (V), wherein the vehicle system (S) comprises a wind determining unit (U_{WD}) configured for determining a wind direction (Dw) at the location (L), wherein the method comprises the steps:
detecting the precipitation condition (C_{P}) at the location (L) by the precipitation detection unit (U_{PD});
determining the wind direction (D_{W}) at the location (L) by the wind determining unit (U_{WD});
initiating a vehicle activity (A_{V}) based on the detected precipitation condition (C_{P}) and the determined wind direction (D_{W}), wherein the initiated vehicle activity (A_{V}) is limiting precipitation from entering the interior compartment (2) of the vehicle (V) when at least one of the one or more door structures (1) is arranged in an open door position (Po).

10. The method according to claim 9,
wherein the vehicle activity (A_{V}) is related to positioning of the vehicle (V) at the location (L), wherein the method further comprises the steps: stopping the vehicle (V) at the location (L) upon the initiated vehicle activity (A_{V}) with a vehicle side (Sv) positioned as a leeward side (S_{L}) of the vehicle (V) in relation to the determined wind direction (Dw) at the location (L); enabling displacement of one or more door structures (1) arranged on the leeward side (S_{L}) of the vehicle (V) from the closed door position (Pc) to an open door position (Po).

11. The method according to claim 10,
wherein the method further comprises the step: stopping the vehicle (V) at the location (L) upon the initiated vehicle activity (Av) with the leeward side (S_{L}) of the vehicle (V) facing a road curb side (S_{RC}).

12. The method according to any of claims 9 to 11,
wherein the vehicle system (S) comprises a door positioning unit (U_{DP}), wherein the vehicle activity (A_{V}) is related to positioning of at least one of the one or more door structures (1), wherein the method further comprises the step:
arranging at least one of the one or more door structures (1) into a predetermined door opening position (P_{OPD}) upon the initiated vehicle activity (A_{V}) by means of the door positioning unit (U_{DP}).

13. The method according to claim 12,
wherein the precipitation detection unit (U_{PD}) further is configured for detecting a precipitation intensity amount (A_{PI}) upon detection of the precipitation condition (C_{P}) at the location (L), wherein the method further comprises the step:
arranging at least one of the one or more door structures (1) into the predetermined door opening position (P_{OPD}), wherein the predetermined door opening position (P_{OPD}) is depending on the detected precipitation intensity amount (A_{PI}).

14. The method according to claim 12 or 13,
wherein the wind determining unit (U_{WD}) further is configured for detecting a wind speed (Sw) at the location (L), wherein the method further comprises the step: arranging at least one of the one or more door structures (1) into the predetermined door opening position (P_{OPD}), wherein the predetermined door opening position (P_{OPD}) is depending on the wind speed (Sw).

15. The method according to any of claims 12 to 14,
wherein the vehicle system (S) further comprises a passenger detection unit (U_{PA}) configured for determining a number of passengers exiting and/or entering the vehicle (V), wherein the method further comprises the step:
arranging at least one of the one or more door structures (1) into a predetermined door opening position (P_{OPD}), wherein the predetermined door opening position (P_{OPD}) is depending on the detected number of passengers exiting and/or
entering the vehicle (V).

16. The method according to any of claims 9 to 15,
wherein the location (L) is a predetermined destination (D_{DP}) of the vehicle (V), wherein the method further comprises the steps: driving the vehicle (V) to the predetermined destination (D_{DP}); and initiating the vehicle activity (A_{V}) at the predetermined destination (D_{DP}).

17. A vehicle comprising the vehicle system (S) according to any of claims 1 to 8.
